(19) Europäisches Patentamt
European Patent Office
Office européen des brevets

(11) Veröffentlichungsnummer: **0 150 158 B1**

(12) **EUROPÄISCHE PATENTSCHRIFT**

(45) Veröffentlichungstag der Patentschrift: **18.03.92**

(51) Int. Cl.[5]: **C09B 67/06**, D06L 3/12, C09B 67/42

(21) Anmeldenummer: **85810012.6**

(22) Anmeldetag: **18.01.85**

# (54) Verfahren zur Sprühtrocknung leicht wasserlöslicher Farbstoffe und optischer Aufheller.

(30) Priorität: **24.01.84 CH 297/84**

(43) Veröffentlichungstag der Anmeldung:
**31.07.85 Patentblatt 85/31**

(45) Bekanntmachung des Hinweises auf die Patenterteilung:
**18.03.92 Patentblatt 92/12**

(84) Benannte Vertragsstaaten:
**CH DE FR GB IT LI**

(56) Entgegenhaltungen:
**CH-A- 603 767**
**DE-A- 2 459 895**
**DE-B- 2 601 470**
**FR-A- 1 372 507**
**US-A- 3 447 933**

(73) Patentinhaber: **CIBA-GEIGY AG**
**Klybeckstrasse 141**
**CH-4002 Basel(CH)**

(72) Erfinder: **Schenkenberger, Ernst, Dr.**
**Brunnenweg 19**
**W-7888 Rheinfelden(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand vorliegender Erfindung ist ein Verfahren zur Sprühtrocknung leicht wasserlöslicher Farbstoffe und optischer Aufheller, die nach diesem Verfahren erhaltenen Farbstoff- bzw. Aufhellergranulate sowie deren Verwendung zum Färben und optischen Aufhellen von Textilmaterial, Leder oder Papier.

Es sind eine ganze Reihe von Verfahren bekannt, um Farbstoffe oder optische Aufheller, die am Ende der Synthese im allgemeinen in Form einer wässrigen Suspension oder als Presskuchen anfallen, in eine feste Handelsform zu überführen. Neben der Trocknung z.B. in Schaufeltrocknern, Dünnschichtkontakttrocknern, im Wirbelbett oder in Vakuumtrockenschränken hat ein weiteres Verfahren an Bedeutung gewonnen und zwar die Sprüh- oder Zerstäubungstrocknung (F. Rosenbloom, ADR, August 1967, p. 15-16). Vorteil dieses Verfahrens ist, dass der trockene Farbstoff bzw. Aufheller in Form von Granulaten anfällt, die staubarm sind, in Wasser rasch zerfallen und sich gut dosieren lassen.

Eine mechanische Nachbehandlung, wie beispielsweise nach dem Trocknen im Schaufeltrockner, ist nicht erforderlich. Wird ferner die Sprühtrocknung unter Abtrennung des Feingutanteils durchgeführt, so erhält man ein Granulat mit enger Korngrösseverteilung.

Die Sprühtrocknung von Lösungen gut wasserlöslicher Farbstoffe und optischer Aufheller gestaltet sich jedoch insofern problematisch, als leichte, zerbrechliche Granulate entstehen oder anstelle eines Granulats harzähnliche bzw. ölige, stark klebende Tropfen erhalten werden, die sich an der Wandung im Innern des Sprühtrockners niederschlagen.

In der DE-PS 24 59 895 wird empfohlen, im Falle von niedrigschmelzenden basischen Farbstoffen die Sprühtrocknung nicht mit einer Lösung der Farbstoffe, sondern mit einer Farbstoffsuspension durchzuführen und zwar so, dass der Farbstoff praktisch in ungelöster Form vorliegt. Mit gut wasserlöslichen Farbstoffen und Aufhellern ist dies kaum zu realisieren; hinzu kommt, dass so hergestellte Granulate oft eine nicht ausreichende Bruch- und Abriebfestigkeit aufweisen.

Desweiteren ist eine Sprühtrocknung bekannt, bei der die wässrige Farbstofflösung erhitzt und danach versprüht wird (US-A-3 447 933).

Es wurde nun gefunden, dass man von derartigen Farbstoffen bzw. optischen Aufhellern überraschenderweise dann einwandfreie Granulate erhält, wenn man diese in Form einer gesättigten wässrigen Lösung in den Trockner eingibt, die einen gewissen Anteil an ungelöstem, daneben aber auch gelöstem Farbstoff bzw. Aufheller enthält.

Gegenstand der Erfindung ist somit ein Verfahren zur Sprühtrocknung leicht wasserlöslicher Farbstoffe und optischer Aufheller, dass dadurch gekennzeichnet ist, dass man von einer gesättigten wässrigen Lösung ausgeht, die ungelösten Farbstoff bzw. optischen Aufheller enthält, wobei das Verhältnis von gelöstem zu ungelöstem Anteil 1:9 bis 9:1 beträgt.

Vorteilhaft verwendet man zur Sprühtrocknung eine gesättigte wässrige Lösung mit Feststoffanteil (Sprühslurry), in der das Verhältnis von gelöstem zu ungelöstem Farbstoff/Aufheller 1:1 bis 3:1 beträgt. Ferner erweist es sich zur Erzielung eines abriebfesten Granulats als zweckmässig von solchen feststoffhaltigen Lösungen auszugehen, die 20 bis 60 Gew.%, insbesondere 30 bis 40 Gew.%, bezogen auf das Gesamtgewicht des Sprühslurrys, an gegebenenfalls coupiertem Farbstoff bzw. Aufheller enthalten. Eine Lösung mit einem Farbstoff/Aufhellergehalt >60 Gew.% ist zu viskos und lässt sich nicht mehr ohne Schwierigkeiten fördern bzw. versprühen.

Unter in Wasser leicht löslichen Farbstoffen oder optischen Aufhellern sind solche mit einer Wasserlöslichkeit > 100 $g/l_{25°C}$ zu verstehen. Als Farbstoffe kommen dabei in erster Linie Textilfarbstoffe in Betracht, die den verschiedensten chemischen Klassen angehören. Es handelt sich beispielsweise um anionische Farbstoffe, wie Nitro-, Aminoketon-, Ketonimin-, Methin-, Nitrodiphenylamin-, Chinolin-, Aminonaphthochinon- oder Cumarinfarbstoffe oder auch saure Farbstoffe auf Basis von Gelbholzextrakt, insbesondere saure Anthrachinon- und Azofarbstoffe, wie Monoazo- und Disazofarbstoffe.

Diese Farbstoffe enthalten mindestens eine anionische wasserlöslichmachende Gruppe, wie z.B. eine Carbonsäure- oder insbesondere eine Sulfonsäuregruppe. Die Farbstoffe liegen dabei im allgemeinen in ihrer Salzform vor, wie z.B. als Lithium-, Natrium-, Kalium- oder Ammoniumsalz.

Ferner kommen basische, d.h. kationische Farbstoffe in Frage. Es handelt sich hier beispielsweise um die Halogenide, Sulfate, Methosulfate oder Metallhalogenid-Salze, z.B. Tetrachlorozinkate von Azofarbstoffen, wie Monoazo-, Disazo- und Polyazofarbstoffen, von Anthrachinonfarbstoffen, Phthalocyaninfarbstoffen, Diphenylmethan- und Triarylmethanfarbstoffen, Methin-, Polymethin- und Azomethinfarbstoffen, von Thiazol-, Ketonimin-, Acridin-, Cyanin-, Nitro-, Chinolin-, Benzimidazol-, Xanthen-, Azin-, Oxazin- und Thiazinfarbstoffen.

Derartige basische Farbstoffe sind unter den verschiedensten Bezeichnungen im Handel.

Ausser zur Trocknung von sauren oder basischen Textilfarbstoffen eignet sich das vorliegende Verfahren insbesondere zur Sprühtrocknung von wasserlöslichen optischen Aufhellern und zwar in erster Linie von Stilbenaufhellern, vor allem solche vom Typ der Bis-triazinylaminostilben-disulfonsäuren, der Bis-styrylbiphenyle und -benzole und der Bis-triazolylstilben-disulfonsäuren. Dabei liegen die sulfogruppenhaltigen Aufheller vorzugsweise in Form ihrer Metallsalze vor, wie sie bei der Synthese anfallen, z.B. Lithium-, Kalium-, Magnesium- oder vor allem Natriumsalze sowie Ammonium-, Amin- oder Alkanolaminsalze. Möglich ist auch die Verwendung von Salzgemischen oder von partiell ausgesäuerten Aufhellerverbindung sowie von Aufhellern in Form der "freien Säure".

Bevorzugt werden mit Hilfe des erfindungsgemässen Verfahrens sulfogruppenhaltige Stilbenaufheller der Formel

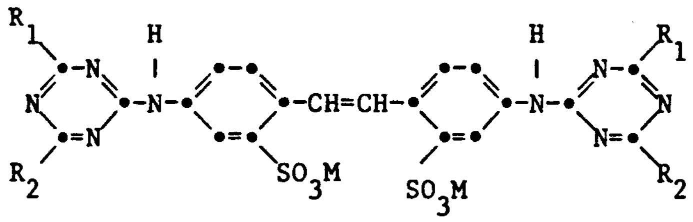 ,

worin
M Wasserstoff, ein Alkalimetall-, Erdalkalimetall-, Ammonium- oder Aminsalzion, $R_1$ und $R_2$ unabhängig voneinander $NH_2$, $NH-CH_3$, $NH-C_2H_5$, $N(CH_3)_2$, $N(C_2H_5)_2$, $NH-CH_2-CH_2-OH$, $NH-CH_2-CH_2-CH_2-OH$, $N(CH_2-CH_2-OH)_2$, $N(CH_2-CH_2-CH_2OH)_2$, $N(CH_3)(CH_2-CH_2-OH)$, $NH-CH_2-CH_2-O-CH_2-CH_2-OH$, $NH-CH_2-CH_2-CH_2-SO_3M$, OH, $OCH_3$, $OCH(CH_3)_2$, $O-CH_2-CH_2-O-CH_3$,

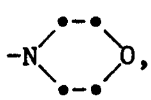, $SCH_3$ ,

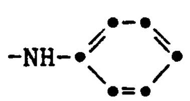 , 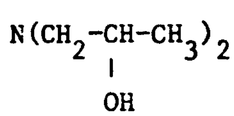 , 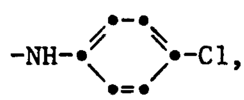, 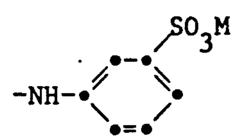 ,

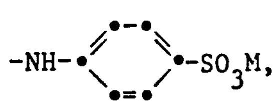 , 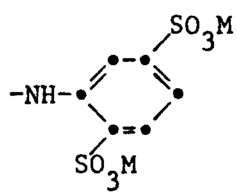 oder 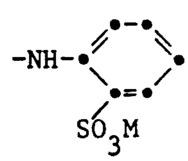

bedeuten, worin M Wasserstoff, ein Alkalimetall-, Erdalkalimetall-, Ammonium- oder Aminsalzion bedeutet, der Formel

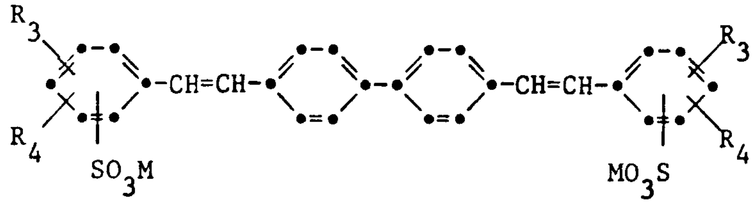 ,

worin

$R_3$ Wasserstoff, Alkyl mit 1 bis 4 Kohlenstoffatomen, Alkoxy mit 1 bis 4 Kohlenstoffatomen, Halogen oder $SO_3M$,
$R_4$ Wasserstoff oder Alkyl mit 1 bis 4 Kohlenstoffatomen und
M Wasserstoff, ein Alkalimetall-, Erdalkalimetall-, Ammonium- oder Aminsalzion bedeuten,
oder der Formel

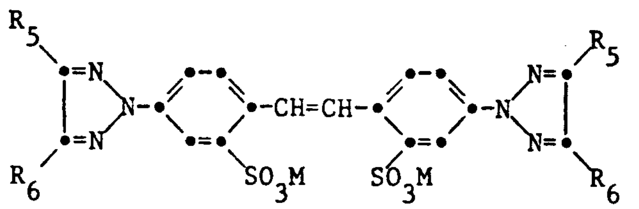
,

worin
M Wasserstoff, ein Alkalimetall-, Erdalkalimetall-, Ammonium- oder Aminsalzion und
$R_5$ und $R_6$ unabhängig voneinander Wasserstoff, $CH_3$,

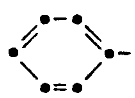
,
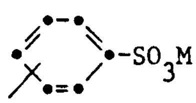

oder $R_5$ und $R_6$ zusammen die Ergänzung zu einem Benzolring bedeuten,
getrocknet.

Durchgeführt wird die Sprühtrocknung in zwei Teilschritten:
a) Ansetzen der zu versprühenden gesättigten Farbstoff- bzw. Aufheller-Lösung mit Feststoffanteil;
b) Einbringen der gesättigten, ungelösten Farbstoff/Aufheller enthaltenden Lösung in den Sprühtrockner und Verdampfen des Wassers.

Daran kann sich, insbesondere, wenn keine Feingutabtrennung durchgeführt wird, noch ein weiterer Schritt, nämlich die Entstäubung des getrockneten Farbstoff/Aufhellergranulats anschliessen.

Die Bereitung der zu versprühenden gesättigten Farbstoff- bzw. Aufhellerlösung mit Feststoffanteil gemäss a) geschieht derart, dass man entweder die Synthesesuspension des Farbstoffs/Aufhellers auf den erforderlichen Produktgehalt verdünnt bzw. aufkonzentriert oder den Farbstoff/Aufhellerpresskuchen in der entsprechenden Menge Wasser anschlämmt und anschliessend die Suspension (den Sprühslurry) temperiert. Das Verhältnis von gelöstem zu ungelöstem Anteil (Farbstoff bzw. Aufheller) wird über die Menge an zu trocknendem Material im Sprühslurry und die Temperatur gesteuert. Man kann aber auch so vorgehen, dass man die Synthesesuspension oder wässrige Anschlämmung des Farbstoff- bzw. Aufhellerpresskuchens erhitzt, bis eine klare Lösung entstanden ist. Ein gegebenenfalls vorhandener geringer Anteil unlöslicher Nebenprodukte kann auf diese Weise leicht durch Filtration entfernt werden. Dann lässt man die Lösung langsam abkühlen, wobei ein Teil des gelösten Farbstoffs bzw. Aufhellers wieder ausfällt. Bei gut kristallisierenden Verbindungen kommt es zur Bildung feinkristalliner Niederschläge. Das vorgegebene Verhältnis von gelöstem zu ungelöstem Produktanteil wird auch hier im Wesentlichen durch Wahl der Endtemperatur der Farbstoff- bzw. Aufhellerlösung eingestellt.

Geht man von einem grobkristallinen Produkt aus oder fällt der Farbstoff/Aufheller nach Abkühlen der Lösung grobkristallin aus, so ist es zweckmässig, vor der Sprühtrocknung noch eine Nassmahlung durchzuführen, z.B. mittels einer Rührwerks-Kugelmühle, einer Stiftscheibenmühle oder einer Sandmühle. Es erweist sich als vorteilhaft, die Farbstoff/Aufheller-suspension vor der Mahlung mit einem Dispergiermittel zu versetzen. Als Dispergiermittel kommen in erster Linie anionische und nichtionische oberflächenaktive Substanzen in Betracht, beispielsweise Aethylenoxidaddukte oder Formaldehydkondensate aromatischer Sulfonsäuren.Es ist vielfach ausreichend, wenn der kristalline Anteil auf eine mittlere Teilchengrösse von < 100 µm heruntergemahlen wird.

Zweckmässigerweise temperiert man die Farbstoff- bzw. Aufhellerlösung mit Feststoffanteil, den Sprühslurry, auf 5° bis 50°C unabhängig davon, ob der Farbstoff bzw. Aufheller zuvor durch Erhitzen in Lösung gebracht oder einfach nur angeschlämmt wurde. Im Temperaturbereich von 5° bis 50°C ist der Sprühslurry dünnflüssig - die Viskosität liegt im Bereich von 5 bis 100 mPa•s - und lässt sich daher sehr

gut pumpen und problemlos im Trockner versprühen. Als besonders günstig erweisen sich Temperaturen im Bereich von 15 bis 40 ° C, da hier die Viskosität des Sprühslurrys ein Minimum durchläuft. Die Lage des Minimums in diesem Temperaturbereich ist abhängig vom jeweiligen Farbstoff/Aufheller. Auch ist das Viskositätsminimum je nach Farbstoff bzw. Aufheller unterschiedlich stark ausgeprägt. Durch Einstellen minimaler Viskositätswerte können demnach Farbstoff- bzw. Aufhellersuspensionen mit einem relativ hohen Produktgehalt sprühgetrocknet werden, was sich günstig auf die Energiebilanz der Trocknung auswirkt.

Häufig ist noch eine Coupagezugabe zur Suspension erforderlich, um den Farbstoff bzw. Aufheller auf Handelsstärke einzustellen. Diese Coupagemittel sollen die Eigenschaft haben, unter den vorgegebenen Bedingungen trocknungsfähig zu sein, ferner dürfen sie nicht mit dem Farbstoff bzw. Aufheller in Wechselwirkung treten. Besonders bewährt haben sich Natriumchlorid, Kaliumsulfat, Natriumsulfat, Zuckerderivate, wie z.B. Dextrin; Knochenleim oder Ammoniumchlorid, bzw. Ammoniumsulfat ferner anionische Dispergatoren, wie Ligninsulfonat oder Naphthalinsulfonsäure-Formaldehydkondensat.

Neben der Coupagezugabe kann die feststoffhaltige Farbstoff- bzw. Aufhellerlösung vor der Sprühtrocknung natürlich noch mit weiteren, in festen Formulierungen üblicherweise enthaltenen Hilfsmitteln versetzt werden. Genannt sind beispielsweise Antischaummittel, oberflächenaktive Mittel, wie z.B. anionische Dispergiermittel, ferner Sequestrierungsmittel oder auch Bindemittel zur Erhöhung der Abriebfestigkeit der Granulate.

Zur Sprühtrocknung oder auch Zerstäubungstrocknung gemäss b) wird die feststoffhaltige Farbstoff- bzw. Aufhellerlösung (der Sprühslurry) über eine zur Erzeugung von Tropfen gewünschter Grösse geeignete Vorrichtung (z.B. Düse, Zertropfer, Schwinger oder rotierende Scheibe) in den Trockner eingegeben. Die Gaseingangstemperatur des Trockners liegt bei 200 ° bis 350 ° C, die Gasausgangstemperatur bei 100 ° bis 150 ° C, dabei bewegt sich das zerstäubte Trockengut zweckmässigerweise in Richtung der Trocknungsluft (Gleichstromführung).

Die Trocknung wird so gestaltet, dass die Produkttemperatur nicht über einen spezifischen kritischen Grenzwert steigt, oberhalb dessen das Granulat irreversible Veränderungen erleidet. Man erhält ein rieselfähiges Granulat, das sich ohne Schwierigkeiten aus dem Trockner austragen und verpacken lässt.

Gegenüber der konventionellen Trocknung im Schaufeltrockner bzw. Vakuumschrank weist das erfindungsgemässe Verfahren folgende Vorteile auf: Restfeuchte und Partikelgrösse lassen sich steuern; das Verfahren lässt sich kontinuierlich ausführen: eine Mahlung in der Mühle entfällt; das zerstäubungsgetrocknete Granulat weist eine enge Korngrösseverteilung auf. Zudem handelt es sich hier um ein produktschonendes Verfahren, infolge des Verdunstungseffektes und der kürzeren Verweildauer des Farbstoffes im Trocknungsaggregat von ca. 45 Sekunden, was zur Folge hat, dass keine Agglomeration der Primärpartikel erfolgt und die Wärmebelastung des Produktes sehr gering ist; es ist ferner kostengünstig durch eine Einsparung von Arbeitsprozessen.

Die nach dem erfindungsgemässen Verfahren erhaltenen Farbstoff- oder Aufhellergranulate zeichnen sich ferner durch ihr hohes Schüttgewicht ihre Abriebfestigkeit, Formstabilität und Staubarmut aus.

Je nach Farbstoff oder Aufheller, dienen sie zum Färben bzw. optischen Aufhellen von Textilmaterialien, Leder oder Papier.

Die folgenden Beispiele erläutern die Erfindung; Teile bedeuten Gewichtsteile und Prozente Gewichtsprozente. Viskositätsmessungen wurden auf dem Rheomat 115 der Firma Contraves durchgeführt.

Beispiel 1: 200 Teile Presskuchen (Trockengehalt 52%) des optischen Aufhellers der Formel

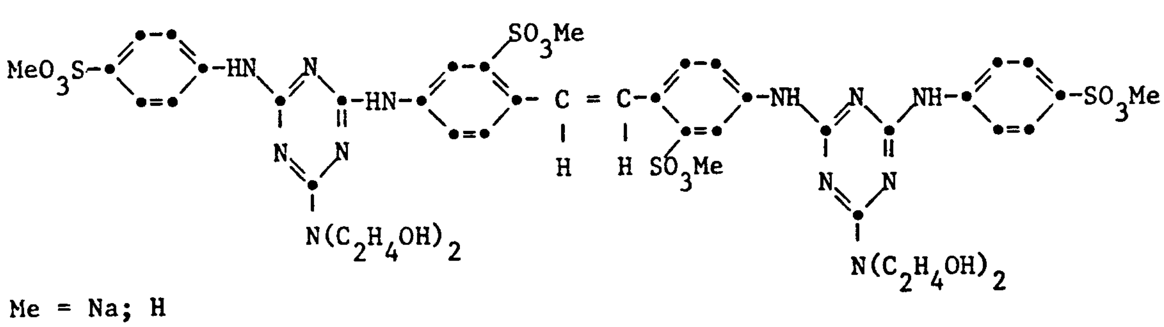

Me = Na; H

der zunächst als Dinatriumsalz vorliegt, werden mit 90 Teilen Wasser verrührt und durch Zugabe von 18 Teilen 50%iger Kalilauge in das Dinatrium-Dikaliumsalz überführt. Man erwärmt anschliessend auf 60 ° C, wodurch eine klare Lösung entsteht, welche zur Abscheidung geringer Verunreinigungen filtriert wird. Bei Abkühlung der Lösung auf eine Temperatur von ca. 30 ° C kristallisiert ein Teil des optischen Aufhellers aus,

und man erhält eine milchige Lösung (trübe Suspension). Etwa 10% des Aufhellers sind bei dieser Temperatur wieder ausgefallen und liegen in feinkristalliner Form vor. Der Sprühslurry hat eine Viskosität von 100 mPa•s (Viskositätsminimum) und lässt sich auf einem Düsenzerstäubungstrockner (Lufteintrittstemperatur ca. 300 ° C, Luftaustrittstemperatur ca. 120 ° C) einwandfrei sprühtrocknen. Das erhaltene Granulat lässt sich gut aus dem Trockner austragen; keine Produktanbackungen im Turm.
Schüttgewicht: ca. 0,5 kg/l.

Versprüht man hingegen die, wie vorstehend beschrieben, bei 60 ° C erhaltene klare Lösung, so entsteht ein klebriges, sehr leichtes Pulver, das Wandanbackungen bildet und sich schlecht aus dem Trockenturm austragen lässt. Das Schüttgewicht liegt hier bei nur 0,2 bis 0,3 kg/l.

Beispiel 2: 200 Teile Presskuchen (Trockengehalt ~ 50%) des optischen Aufhellers der Formel

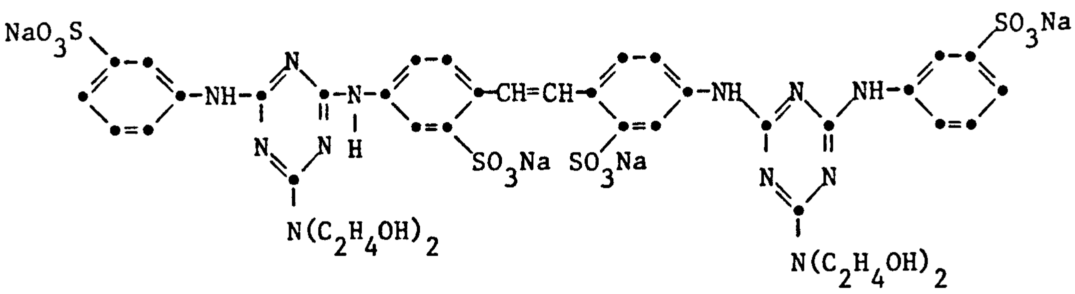

werden mit 250 Teilen Wasser und 45 Teilen Soda verrührt und durch Erwärmen auf 60 ° bis 70 ° C in Lösung gebracht.

Durch anschliessendes Abkühlen auf ca. 35 ° C entsteht eine milchig trübe Lösung (feinkristalline Suspension). Etwa 25% des Aufhellers liegen bei dieser Temperatur als ungelöster feinkristalliner Feststoff vor. Der Sprühslurry hat eine Viskosität von 7 mPa•s und lässt sich unter den im Beispiel 1 angegebenen Bedingungen problemlos sprühtrocknen. Man erhält ein freifliessendes Granulat mit einem Schüttgewicht von ca. 0,4 kg/l.

Beispiel 3: Man verfährt wie im Beispiel 2 beschrieben, verwendet jedoch anstelle von 45 Teilen Soda 30 Teile Natriumchlorid. Auch hier erhält man nach der Sprühtrocknung ein rieselfähiges Granulat, dessen Austragung aus dem Trockner keinerlei Schwierigkeiten bereitet.

Beispiel 4: 200 Teile Presskuchen (Trockengehalt ~ 50%) des Farbstoffs der Formel

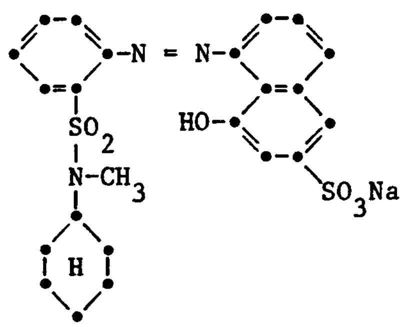

werden zusammen mit 6 Teilen Natriumcumolsulfonat, 4 Teilen Aethylendiamintetraessigsäure als Natriumsalz und 4 Teilen Naphthalinsulfonsäure-Formaldehyd-Kondensat unter Rühren in 35 Teile Wasser eingetragen. Man erhält eine Suspension, die man auf 20 ° C temperiert. Bei dieser Temperatur sind ca. 10% des Farbstoffs gelöst, d.h. 90% des Farbstoffs sind als Feststoff suspendiert. Die Suspension ist dünnflüssig und hat eine Viskosität von ca. 20 mPa•s (Viskositätsminimum). Vor der Sprühtrocknung wird der kristalline Farbstoffanteil noch auf eine mittlere Teilchengrösse < 100 µm heruntergemahlen und der so vorbereitete Sprühslurry anschliessend, wie im Beispiel 1 angegeben, sprühgetrocknet. Man erhält ein staubarmes abriebfestes Granulat mit einem Schüttgewicht von > 0,5 kg/l.

Erwärmt man den Sprühslurry auf Temperaturen von über 20 ° C, so steigt die Viskosität rasch an. Bei Versprühen einer auf 30 ° C temperierten Farbstoffsuspension erhält man ein stäubendes, abriebempfindliches Granulat mit niedrigem Schüttgewicht, während eine auf 40 ° C erwärmte Suspension so dickflüssig ist, dass diese sich unter den üblichen Bedingungen, wegen Verstopfens der Düse überhaupt nicht mehr

sprühtrocknen lässt.

**Patentansprüche**

1. Verfahren zur Sprühtrocknung leicht wasserlöslicher Farbstoffe und optischer Aufheller, dadurch gekennzeichnet, dass man von einer gesättigten wässrigen Lösung ausgeht, die a) ungelösten Farbstoff bzw. optischen Aufheller enthält, wobei das Verhältnis von gelöstem zu ungelöstem Anteil 1:9 bis 9:1 beträgt, b) eine Temperatur von 5° bis 50°C und c) eine Viskosität von 5 bis 100 mPa•s aufwiest.

2. Verfahren gemäss Anspruch 1, dadurch gekennzeichnet, dass man von einer gesättigten wässrigen Lösung mit Feststoffanteil ausgeht, in der das Verhältnis von gelöstem zu ungelöstem Anteil 1:1 bis 3:1 beträgt.

3. Verfahren gemäss Anspruch 1, dadurch gekennzeichnet, dass die Temperatur der wässrigen Lösung mit Feststoffanteil auf einen Wert zwischen 15 bis 40°C eingestellt ist, bei der die Viskosität der feststoffhaltigen Lösung minimal ist.

4. Verfahren gemäss Anspruch 1, dadurch gekennzeichnet, dass man von einer feststoffhaltigen Lösung ausgeht, die 20 bis 60 Gew.%, insbesondere 30 bis 40 Gew.%, bezogen auf das Gesamtgewicht des Sprühslurrys, an gegebenenfalls coupiertem Farbstoff bzw. Aufheller enthält.

5. Verfahren gemäss Anspruch 1, dadurch gekennzeichnet, dass man sulfogruppenhaltige Stilbenaufheller sprühtrocknet.

6. Verfahren gemäss Anspruch 1, dadurch gekennzeichnet, dass die gesättigte Farbstoff- bzw. Aufhellerlösung mit Feststoffanteil vor der Sprühtrocknung mit Coupagemittel versetzt wird.

7. Das nach dem Verfahren gemäss Anspruch 1 erhaltene Farbstoff- bzw. Aufhellergranulat.

8. Verwendung des Farbstoff- bzw. Aufhellergranulats gemäss Anspruch 7 zum Färben bzw. optischen Aufhellen von Textilmaterial, Leder oder Papier.

**Claims**

1. A process for spray-drying readily water-soluble dyes and fluorescent brighteners from a saturated aqueous solution which a) contains undissolved dye or fluorescent brightener in a ratio between dissolved and undissolved matter of 1:9 to 9:1, b) has a temperature of 5° to 50°C and c) has a viscosity of 5 to 100 mPa.s.

2. A process according to claim 1, wherein the saturated aqueous solution with solids content contains dissolved and undissolved matter in a ratio of 1:1 to 3:1.

3. A process according to claim 1, wherein the temperature of the aqueous solution with solids content is adjusted to a value between 15 and 40°C at which the viscosity of the solids-containing solution is at a minimum.

4. A process according to claim 1, wherein the solids-containing solution used contains 20 to 60% by weight, in particular 30 to 40% by weight, based on the total weight of the spray slurry, of diluent-containing or diluent-free dye or brightener.

5. A process according to claim 1, wherein sulfo-group-containing stilbene brighteners are spray-dried.

6. A process according to claim 1, wherein the saturated dye or brightener solution with solids content has diluents added before the spray-drying.

7. The dye or brightener granules obtained using the process of claim 1.

8. Use of the dye or brightener granulate of claim 7 for the dyeing or fluorescent brightening of textile

material, leather or paper.

**Revendications**

1. Procédé de séchage par pulvérisation de colorants et d'azurants optiques facilement solubles dans l'eau, caractérisé en ce que l'on part d'une solution aqueuse saturée qui
   a) contient une fraction non dissoute de colorant ou d'azurant optique, le rapport de la fraction dissoute à la fraction non dissoute valant de 1:9 à 9:1,
   b) se trouve à une température de 5 à 50 ° C, et
   c) présente une viscosité de 5 à 100 mPa.s.

2. Procédé conforme à la revendication 1, caractérisé en ce que l'on part d'une solution aqueuse saturée, contenant une fraction de matières solides, dans laquelle le rapport de la fraction dissoute à la fraction non dissoute vaut de 1:1 à 3:1.

3. Procédé conforme à la revendication 1, caractérisé en ce que la température de la solution aqueuse contenant une fraction de matières solides est amenée à une valeur située entre 15 et 40 ° C et pour laquelle la viscosité de la solution contenant des matières solides est minimale.

4. Procédé conforme à la revendication 1, caractérisé en ce que l'on part d'une solution contenant des matières solides, qui contient de 20 à 60 % en poids, et en particulier de 30 à 40 % en poids, par rapport au poids total de la suspension à pulvériser, d'un colorant ou d'un azurant éventuellement coupé.

5. Procédé conforme à la revendication 1, caractérisé en ce que l'on opère le séchage par pulvérisation d'un azurant stilbénique comportant des groupes sulfo.

6. Procédé conforme à la revendication 1, caractérisé en ce que l'on ajoute un agent de coupure à la solution saturée de colorant ou d'azurant, contenant une fraction de matières solides, avant de la soumettre au séchage par pulvérisation.

7. Granulés de colorant ou d'azurant obtenus selon le procédé conforme à la revendication 1.

8. Utilisation des granulés de colorant ou d'azurant conformes à la revendication 7, pour la teinture ou l'azurage optique de matières textiles, de cuir ou de papier.